# EUROPÄISCHE PATENTSCHRIFT

(11) **EP 1 662 163 B1**
(45) Veröffentlichungstag und Bekanntmachung des Hinweises auf die Patenterteilung: **16.01.2008**
(21) Anmeldenummer: 05024501.8
(22) Anmeldetag: 10.11.2005
(51) Int. Cl.: F16D 48/06

(54) **Verfahren und Vorrichtung zum Ermitteln einer eine Übertragungssicherheit zwischen zwei durch Reibeingriff eine Bewegung übertragenden Bauteilen beschreibende Übertragungsgröße**
Method and arrangement to determine of a transmission parameter which describes a transmission safety between two parts which transmit motion through friction
Procédé et dispositif pour déterminer un paramètre de transmission qui décrit une sécurité de transmission entre deux parts, lesquelles transmettent mouvement par friction

(30) Priorität: 27.11.2004 DE 102004057346
(43) Veröffentlichungstag der Anmeldung: 31.05.2006
(73) Patentinhaber: LuK Lamellen und Kupplungsbau Beteiligungs KG, 77813 Bühl (DE)
(72) Erfinder: Reuschel, Michael, 77833 Ottersweier (DE)

(56) Entgegenhaltungen:
- WO-A-02/101264
- DE-A1- 10 050 218
- DE-A1- 10 310 831

## Beschreibung

Die Erfindung betrifft ein Verfahren zum Ermitteln einer eine Übertragungssicherheit zwischen zwei durch Reibeingriff eine Bewegung übertragenden Bauteilen beschreibenden Übertragungsgröße. Die Erfindung betrifft weiter eine Vorrichtung zum Durchführen eines solchen Verfahrens. Dies ist beispielsweise aus der WO 02/101264 A oder der DE 103 10 831 A1 bekannt.

Aus Komfort, Verbrauchs- und Umweltgründen werden in modernen Kraftfahrzeugen zunehmend automatisierte Antriebsstränge eingesetzt. Solche Antriebsstränge enthalten beispielsweise ein Kegelscheibenumschlingungsgetriebe mit kontinuierlich veränderbarer Übersetzung. Um einen dauerhaft sicheren Betrieb eines solchen Getriebes zu gewährleisten, ist eine geeignete Anpressung zwischen dem Umschlingungsmittel und den Kegelscheiben maßgeblich. Geeignet heißt, dass die Anpressung einerseits sicherstellt, dass das Umschlingungsmittel nicht rutscht, und andererseits nicht unnötig hoch ist, um keine unzulässigen Bauteilbelastungen zu erzeugen und in Folge des hohen bereitzustellenden Hydraulikdruckes den Wirkungsgrad zu verschlechtern. Um die Anpressung zweckentsprechend zu steuern oder zu regeln, ist eine genaue Kenntnis des Schlupfzustandes bzw. der Übertragungssicherheit zwischen den Kegelscheiben des Umschlingungsgetriebes und dem Umschlingungsmittel erforderlich. Eine direkte Messung dieses Schlupfes ist aufwendig, da neben den Drehzahlen der Kegelscheibenpaare und der Geschwindigkeit des Umschlingungsmittels auch die genauen Wirkradien bekannt sein müssen, auf denen der Reibeingriff zwischen dem Umschlingungsmittel und den Kegelflächen der Kegelscheibenpaare erfolgt.

Der Erfindung liegt die Aufgabe zugrunde, ein in seiner Durchführung einfaches Verfahren zum Ermitteln einer die Übertragungssicherheit beispielsweise eines Kegelscheibenumschlingungsgetriebes beschreibenden Übertragungsgröße anzugeben. Der Erfindung liegt weiter die Aufgabe zugrunde, eine Vorrichtung zur Durchführung eines solchen Verfahrens anzugeben.

Der das Verfahren betreffende Teil der Erfindungsaufgabe wird mit zunächst einem Verfahren zum Ermitteln einer eine Übertragungssicherheit zwischen zwei durch Reibeingriff eine Bewegung übertragenen Bauteilen beschreibenden Übertragungsgröße gelöst, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, welches Verfahren folgende Schritte enthält:
- Modulieren der Anpresskraft in einem vorbestimmten Frequenzbereich während der Bewegungsübertragung,
- Erfassen der Veränderung der Bewegungsübertragung während der Modulation der Anpresskraft,
- Auswerten der Veränderung der Bewegungsübertragung unter Einsatz eines Filterverfahrens und
- Ermitteln der Übertragungsgröße als Ergebnis der Auswertung,
- wobei zur Ermittlung einer Information über die Übertragungssicherheit zwischen den bewegungsübertragenden Bauteilen alle relativen Maxima zwischen den Nulldurchgängen verwendet werden.

Der das Verfahren betreffende Teil der Erfindungsaufgabe wird weiterhin mit einem Verfahren zum Ermitteln einer eine Übertragungssicherheit zwischen zwei durch Reibeingriff eine Bewegung übertragenen Bauteilen beschreibenden Übertragungsgröße gelöst, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, welches Verfahren folgende Schritte enthält:
- Modulieren der Anpresskraft in einem vorbestimmten Frequenzbereich während der Bewegungsübertragung,
- Erfassen der Veränderung der Bewegungsübertragung während der Modulation der Anpresskraft,
- Auswerten der Veränderung der Bewegungsübertragung unter Einsatz eines Filterverfahrens und
- Ermitteln der Übertragungsgröße als Ergebnis der Auswertung,
- wobei die Information über die Übertragungssicherheit aus einer Mittelwertbildung aller relativen Maxima erhalten wird.

Bei dem erfindungsgemäßen Verfahren ist es lediglich erforderlich, die Anpresskraft in einem vorbestimmten Frequenzbereich zu modulieren und dann die Veränderung der Bewegungsübertragung während der Modulation der Anpresskraft zu erfassen, um daraus unter Einsatz üblicher Filterverfahren die Übertragungsgröße zu ermitteln.

Mit Vorteil erfolgt die Filterung in einem frequenzmäßig engen Bereich um den Frequenzbereich der Modulation herum.

Bevorzugt wird weiter zu Filterung ein Bandpassfilter verwendet.

Die Flankensteilheit eines oder mehrerer eingesetzter Filter beträgt bevorzugt wenigstens 40 dB/Dekade.

Bei einer Durchführungsform des erfindungsgemäßen Verfahrens werden zur Ermittlung einer Information über die Übertragungssicherheit zwischen den bewegungsübertragenden Bauteilen alle relativen Maxima zwischen den Nulldurchgängen verwendet.

Erfindungsgemäß ist die Information über die Übertragungssicherheit aus einer Mittelwertbildung aller relativen Maxima zu erhalten.

Bei dem erfindungsgemäßen Verfahren wird vorteilhafter Weise bei der Auswertung ein Tiefpassfilter eingesetzt.

Besonders vorteilhaft ist, wenn bei dem erfindungsgemäßen Verfahren die bewegungsübertragenden Bauteile die beiden über ein Umschlingungsmittel miteinander verbundenen Scheibenpaare eines Umschlingungsgetriebes mit kontinuierlich veränderbarer Übersetzung sind und die Anpresskraft zwischen den Scheibenpaaren und dem Umschlingungsmittel moduliert wird.

Ein bei einem solchen Umschlingungsgetriebe durchgeführtes Verfahren enthält folgende Schritte:
- Ermitteln der Übersetzung iᵥₐᵣ des Umschlingungsgetriebes aus dem Quotienten der Drehgeschwindigkeiten ω_{SS1} und ω_{SS2} der beiden Scheibenpaare,
- Tiefpassfiltern der Übersetzung iᵥₐᵣ zur Bildung des Wertes iᵥₐᵣₜₚ,
- Ermitteln der Drehgeschwindigkeitsdifferenz Δω = ωₛₛ₁ - iᵥₐᵣₜₚωₛₛ₂,
- Bilden des Wertes Δω_{mwf} = Δw - Δω_{mw}, wobei Δω_{mw} der Mittelwert von Δω ist,
- Bandpassfiltern des Wertes Δω_{mwf} zur Bildung des Wertes Δω_{bp},
- Bilden der Übertragungsgröße durch Tiefpassfiltern oder gleitende Mittelwertbildung des Wertes Δω_{bp}.

Eine Vorrichtung zum Ermitteln einer eine Übertragungssicherheit zwischen zwei durch Reibeingriff eine Bewegung übertragenden Bauteilen beschreibenden Übertragungsgröße, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, enthält eine Modulationseinrichtung zum Modulieren der Anpresskraft in einem vorbestimmten Frequenzbereich während der Bewegungsübertragung, eine Bewegungserfassungseinrichtung zum Erfassen der Veränderung der Bewegungsübertragung während der Modulation der Anpresskraft und eine wenigstens ein Filter enthaltende Auswerteinrichtung zur Auswertung der Veränderung der Bewegungsübertragung und zur Ermittlung der Übertragungsgröße als Ergebnis der Auswertung unter Einsatz des Verfahrens.

Das erfindungsgemäße Verfahren und die erfindungsgemäße Vorrichtung können zum Ermitteln der Übertragungssicherheit bei jedwelchen durch Reibeingriff eine Bewegung übertragenden Bauteilen eingesetzt werden, wobei beispielsweise ein Bauteil drehen kann, das andere Bauteil sich linear bewegen kann, zwei Bauteile in drehendem Reibeingriff sind, zwei Bauteile über ein drittes Bauteil miteinander verbunden sind, beispielsweise bei einem Umschlingungsgetriebe usw. Die die Übertragungssicherheit beschreibende Übertragungsgröße ist üblicherweise eine einem Schlupf zwischen zwei oder mehreren in Reibeingriff stehenden Bauteilen entsprechende Größe.

Die Erfindung wird im Folgenden anhand schematischer Zeichnungen beispielsweise in ihrer Anwendung bei einem Umschlingungsgetriebe erläutert.

In den Figuren stellen dar:
- Figur 1: ein Prinzipschaltbild eines Teils eines Antriebsstrangs eines Kraftfahrzeugs mit einem Kegelscheibenumschlingungsgetriebe und zugehöriger Steuerung und

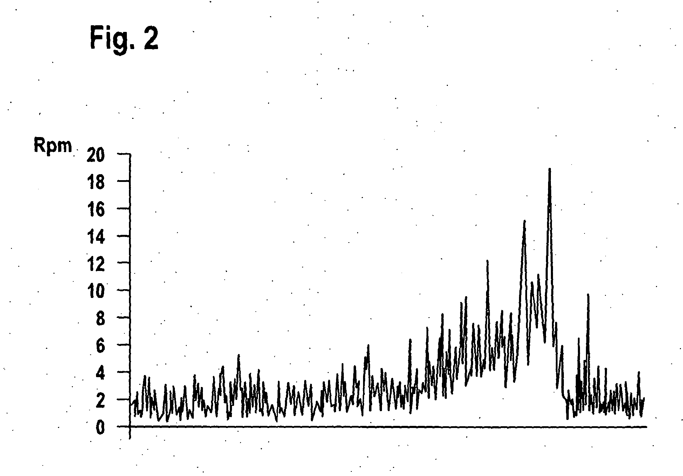

- Figur 2: ein Beispiel einer bei dem erfindungsgemäßen Verfahren auftretenden, dem Schlupf zwischen den über das Umschlingungsmittel in Reibeingriff stehenden Scheibenpaaren entsprechenden Größe.

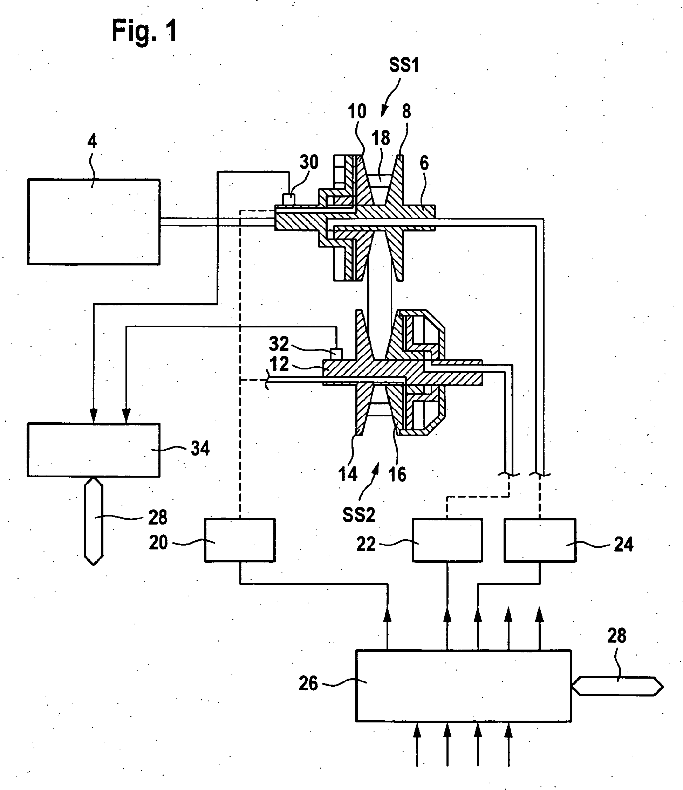

Figur 1 zeigt einen Ausschnitt aus einem Antriebsstrang eines Kraftfahrzeugs mit zugehörigen Steuereinrichtungen. Eine von einer Brennkraftmaschine 4 und Zwischenanordnung einer nicht dargestellten, vorzugsweise automatischen Kupplung und einem Drehrichtungswechselgetriebe angetriebene Eingangswelle 6 ist starr mit einer Kegelscheibe 8 eines antriebsseitigen Scheibensatzes SS1 verbunden. Eine weitere Kegelscheibe 10 ist drehfest und axial verschiebbar auf der Eingangswelle 6 angeordnet. Zwischen einem starr mit der Eingangswelle 6 verbundenen Stützbauteil und der Kegelscheibe 10 sind Druckräume angeordnet, durch deren Druckbeaufschlagung die Kraft veränderbar ist, mit der die Kegelscheibe 10 in Richtung auf die Kegelscheibe 8 drückbar ist.

In ähnlicher Weise weist ein abtriebsseitiges Kegelscheibenpaar SS2 eine starr mit einer Abtriebs- bzw. Ausgangswelle 12 verbundene Kegelscheibe 14 und eine axial bewegliche Kegelscheibe 16 auf, die durch Druckbeaufschlagung zugehöriger Druckräume in Richtung auf die Kegelscheibe 14 drängbar ist. Zwischen den beiden Scheibensätzen SS1 und SS2 läuft ein Umschlingungsmittel 18, beispielsweise eine Gliederkette, um.

Die Anpresskraft, mit der das Umschlingungsmittel 18 an den Kegelflächen der Kegelscheibe reibschlüssig anliegt, wird mittels Hydraulikventilen 20, 22 und 24 gesteuert, wobei das Hydraulikventil 20 beispielsweise in an sich bekannter Weise eine von dem auf die Eingangswelle 6 wirkenden Drehmoment abhängige Grundanpressung bestimmt und mit den Hydraulikventilen 22 und 24 die Übersetzungsverstellung erfolgt.

Zur Steuerung der Ventile 20, 22 und 24 dient ein elektronisches Steuergerät 26, an dessen Eingängen Signale von Sensoren liegen, die für die Steuerung der Ventile wesentliche Informationen enthalten, die entsprechend in dem Steuergerät 26 abgelegten Algorithmen in Steuersignale für die Ventile umgewandelt werden. Weitere Ausgänge des Steuergerätes 26 können beispielsweise eine automatische Kupplung ansteuern. Die Hydraulikventile 22 und 24 zur Übersetzungsverstellung sind nicht beide zwingend. Vorteilhaft kommuniziert das Steuergerät 26 über eine Bus-Leitung 28 mit weiteren Steuergeräten oder elektronischen Einrichtungen des Fahrzeugs.

Da Aufbau und Funktion der bisher beschriebenen Anordnung an sich bekannt sind, werden Einzelheiten nicht beschrieben.

Für einen dauerhaft sicheren Betrieb des Umschlingungsgetriebes ist eine geeignete Anpressung zwischen dem Umschlingungsmittel 18 und den Kegelscheibenpaaren SS1 und SS2 maßgeblich. Diese Anpressung muss derart sein, dass das Umschlingungsmittel nicht rutscht, d.h. unzulässig hoch schlupft, und andererseits nicht unnötig hoch sein, damit die Bauteile wenig belastet werden und das Getriebe mit gutem Wirkungsgrad arbeitet.

Im Folgenden wird die erfindungsgemäße Bestimmung einer der Übertragungssicherheit zwischen den Scheibenpaaren bzw. dem jeweiligen Scheibenpaar und dem Umschlingungsmittel beschreibenden Übertragungsgröße, die dem Schlupf entspricht, erläutert:

Die Drehgeschwindigkeit der Eingangswelle 6 bzw. der Ausgangswelle 12 wird von einem Drehzahlsensor 30 bzw. 32 erfasst. Die Sensoren 30 und 32 sind mit einer Auswerteinrichtung 34 verbunden, die über die Bus-Leitung 28 mit weiteren Einheiten kommuniziert.

Mit Hilfe des Hydraulikventils 20 wird beispielsweise der Anpressdruck zwischen den Scheibenpaaren und dem Umschlingungsmittel mit einer vorbestimmten Anregungsfrequenz verändert.

In einem weiteren Verfahrensschritt werden die Drehgeschwindigkeiten bzw. Drehzahlen der Eingangswelle und der Ausgangswelle, die sich je nach vorhandenem Schlupf mit der Modulation des Anpressdrucks ändern, von den Drehzahlsensoren 30 und 32 erfasst. Aus dem Quotienten der Drehgeschwindigkeiten ω_{SS1} und ω_{SS2} wird die jeweils augenblickliche Übersetzung iᵥₐᵣ es Umschlingungsgetriebes ermittelt.

Anschließend wird die ermittelte Übersetzung iᵥₐᵣ zur Bildung eines "mittleren" Wertes tiefpassgefiltert, so dass der Wert iᵥₐᵣₜₚ erhalten wird.

Mit Hilfe des erhaltenen Wertes wird eine Drehgeschwindigkeitsdifferenz Δω = ω_{SS1}- iᵥₐᵣₜₚω_{SS2} ermittelt.

Diese Drehgeschwindigkeitsdifferenz, die um einen Mittelwert schwankt, wird anschließend Mittelwert freigemacht, indem der Ausdruck Δω_{mwf} = Δw - Δω_{mw} gebildet wird, wobei Δω_{mw} der Mittelwert von Δω ist.

Anschließend erfolgt eine Bandpassfilterung des erhaltenen Wertes Δω_{mf} um die Modulations- bzw. Anregungsfrequenz herum. Zur Ermittlung der Amplituden werden alle relativen Maxima zwischen den Nulldurchgängen verwendet. Als Bandpassfilter können beispielsweise Butterworthfilter 8. Ordnung verwendet werden, deren Durchlassbereich bei einer Anregungs- bzw. Modulationsfrequenz von 33 Hz zwischen 30 und 36 Hz beträgt.

Der durch Bandpassfilterung erhaltene Wert Δω_{bp} wird zur Ermittlung der Übertragungsgröße tiefpassgefiltert oder eine gleitenden Mittelwertbildung unterzogen, so dass die Übertragungsgröße ein Maß für den Schlupf ist, mit dem das Umschlingungsgetriebe arbeitet.

Die derart bestimmte Übertragungsgröße kann zur Steuerung bzw. Regelung des Anpressdrucks des Umschlingungsgetriebes derart verwendet werden, dass das Umschlingungsgetriebe mit dem jeweils optimalen bzw. zweckentsprechenden Schlupf arbeitet.

Wie sich aus dem Vorstehenden ergibt, benötigt das erfindungsgemäße Verfahren bzw. die erfindungsgemäße Vorrichtung nur wenige Sensoren und arbeitet gleichzeitig mit geringer Rechnerbelastung.

### Bezugszeichenliste

- 4: Brennkraftmaschine
- 6: Eingangswelle
- 8: Kegelscheibe
- 10: Kegelscheibe
- 12: Ausgangswelle
- 14: Kegelscheibe
- 16: Kegelscheibe
- 18: Umschlingungsmittel
- 20: Hydraulikventil
- 22: Hydraulikventil
- 24: Hydraulikventil
- 26: Steuergerät
- 28: Bus-Leitung
- 30: Drehzahlsensor
- 32: Drehzahlsensor
- 34: Auswerteinrichtung

## Patentansprüche

1. Verfahren zum Ermitteln einer eine Übertragungssicherheit zwischen zwei durch Reibeingriff eine Bewegung übertragenden Bauteilen beschreibenden Übertragungsgröße, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, welches Verfahren folgende Schritte enthält:
- Modulieren der Anpresskraft in einem vorbestimmten Frequenzbereich während der Bewegungsübertragung,
- Erfassen der Veränderung der Bewegungsübertragung während der Modulation der Anpresskraft,
- Auswerten der Veränderung der Bewegungsübertragung unter Einsatz eines Filterverfahrens und
- Ermitteln der Übertragungsgröße als Ergebnis der Auswertung,
- wobei zur Ermittlung einer Information über die Übertragungssicherheit zwischen den bewegungsübertragenden Bauteilen alle relativen Maxima zwischen den Nulldurchgängen verwendet werden.

2. Verfahren zum Ermitteln einer eine Übertragungssicherheit zwischen zwei durch Reibeingriff eine Bewegung übertragenden Bauteilen beschreibenden Übertragungsgröße, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, welches Verfahren folgende Schritte enthält:
- Modulieren der Anpresskraft in einem vorbestimmten Frequenzbereich während der Bewegungsübertragung,
- Erfassen der Veränderung der Bewegungsübertragung während der Modulation der Anpresskraft,
- Auswerten der Veränderung der Bewegungsübertragung unter Einsatz eines Filterverfahrens und
- Ermitteln der Übertragungsgröße als Ergebnis der Auswertung,
- wobei die Information über die Übertragungssicherheit aus einer Mittelwertbildung aller relativen Maxima erhalten wird.

3. Verfahren nach einem der Ansprüche 1 oder 2, wobei die Filterung in einem frequenzmäßig engen Bereich um den Frequenzbereich der Modulation herum erfolgt.

4. Verfahren nach einem der Ansprüche 1 bis 3, wobei zur Filterung ein Bandpassfilter verwendet wird.

5. Verfahren nach einem der Ansprüche 1 bis 4, wobei ein Filter mit einer Flankensteilheit von wenigstens 40 db/Dekade verwendet wird.

6. Verfahren nach einem der Ansprüche 2 bis 5, wobei zur Ermittlung einer Information über die Übertragungssicherheit zwischen den bewegungsübertragenden Bauteilen alle relativen Maxima zwischen den Nulldurchgängen verwendet werden.

7. Verfahren nach einem der Ansprüche 1 oder 3 bis 6, wobei Information über die Übertragungssicherheit aus einer Mittelwertbildung aller relativen Maxima erhalten wird.

8. Verfahren nach einem der Ansprüche 1 bis 7, wobei bei der Auswertung ein Tiefpassfilter eingesetzt wird.

9. Verfahren nach einem der Ansprüche 1 bis 8, wobei die bewegungsübertragenden Bauteile die beiden über ein Umschlingungsmittel miteinander verbundenen Scheibenpaare eines Umschlingungsgetriebes mit kontinuierlich veränderbarer Übersetzung sind und die Anpresskraft zwischen den Scheibenpaaren und dem Umschlingungsmittel moduliert wird.

10. Verfahren nach Anspruch 9, enthaltend folgende Schritte:
- Ermitteln der Übersetzung iᵥₐᵣ des Umschlingungsgetriebes aus dem Quotienten der Drehgeschwindigkeiten ω_{SS1} und ω_{SS2} der beiden Scheibenpaare,
- Tiefpassfiltern der Übersetzung iᵥₐᵣ zur Bildung des Wertes iᵥₐᵣₜₚ,
- Ermitteln der Drehgeschwindigkeitsdifferenz Δω = ω_{SS1} - iᵥₐᵣₜₚω_{SS2},
- Bilden des Wertes Δω_{mwf} = ΔW - Δω_{mw}, wobei Δω_{mw} gleich der Mittelwert von Δω ist,
- Bandpassfiltern des Wertes Δω_{mwf} zur Bildung des Wertes Δω_{bp},
- Bilden der Übertragungsgröße durch Tiefpassfiltern oder gleitende Mittelwertbildung des Wertes Δω_{bp}.

11. Vorrichtung zum Ermitteln einer eine Übertragungssicherheit zwischen zwei durch Reibeingriff eine Bewegung übertragenden Bauteilen beschreibenden Übertragungsgröße, welche Übertragungsgröße die Übertragungssicherheit durch Reaktion der Bewegungsübertragung auf eine Veränderung der zwischen den in Reibeingriff befindlichen Bauteile wirksamen Anpresskraft beschreibt, welche Vorrichtung enthält:
- eine Modulationseinrichtung (20) zum Modulieren der Anpresskraft in einem vorbestimmten Frequenzbereich während der Bewegungsübertragung,
- eine Bewegungserfassungseinrichtung (30, 32) zum Erfassen der Veränderung der Bewegungsübertragung während der Modulation der Anpresskraft und
- eine wenigstens ein Filter enthaltende Auswerteinrichtung (34) zur Auswertung der Veränderung der Bewegungsübertragung und zur Ermittlung der Übertragungsgröße als Ergebnis der Auswertung unter Einsatz des Verfahrens nach einem der Ansprüche 1 bis 10.

## Claims

1. Method for determining a transmission parameter that describes a reliability of transmission between two components that transmit a motion through frictional engagement, which transmission parameter describes the reliability of transmission through the reaction of the transmission of motion to a change in the clamping force acting between the components that are frictionally engaged, which method includes the following steps:
- modulation of the clamping force in a predetermined frequency range during the transmission of motion,
- detection of the change in the transmission of motion during the modulation of the clamping force,
- evaluation of the change in the transmission of motion using a filter process, and
- determination of the transmission parameter as the result of the evaluation,
- wherein all relative maxima between the zero crossings are used to determine information about the reliability of transmission between the motion-transmitting components.

2. Method for determining a transmission parameter that describes a reliability of transmission between two components that transmit a motion through frictional engagement, which transmission parameter describes the reliability of transmission through the reaction of the transmission of motion to a change in the clamping force acting between the components that are frictionally engaged, which method includes the following steps:
- modulation of the clamping force in a predetermined frequency range during the transmission of motion,
- detection of the change in the transmission of motion during the modulation of the clamping force,
- evaluation of the change in the transmission of motion using a filter process, and
- determination of the transmission parameter as the result of the evaluation,
- wherein the information about the reliability of transmission is obtained by averaging all relative maxima.

3. Method according to one of Claims 1 through 2, wherein the filtering takes place in a narrow frequency range around the frequency range of the modulation.

4. Method according to one of Claims 1 through 3, wherein a band-pass filter is used for the filtering.

5. Method according to one of Claims 1 through 4, wherein a filter having an edge steepness of at least 40 db/decade is used.

6. Method according to one of Claims 2 through 5, wherein all relative maxima between the zero crossings are used to determine information about the reliability of transmission between the motion-transmitting components.

7. Method according to one of Claims 1 or 3 through 6, wherein information about the reliability of transmission is obtained by averaging all relative maxima.

8. Method according to one of Claims 1 through 7, wherein a low-pass filter is employed in the evaluation.

9. Method according to one of Claims 1 through 8, wherein the motion-transmitting components are the two pulleys of a belt-driven conical-pulley transmission with continuously variable transmission ratio joined with each other by an endless torque-transmitting means, and the clamping force between the pulleys and the endless torque-transmitting means is modulated.

10. Method according to Claim 9, containing the following steps:
- determination of the transmission ratio iᵥₐᵣ of the belt-driven conical-pulley transmission from the quotient of the rotational speeds ωₛₛ₁, and ωₛₛ₂ of the two pulleys,
- low-pass filtering of the transmission ratio iᵥₐᵣ to obtain the value iᵥₐᵣₜₚ,
- determination of the difference in rotational speed Δω = ωₛₛ₁ - iᵥₐᵣₜₚω_{SS2},
- obtaining the value Δω_{mwf} = Δw - Δω_{mw}, where Δω_{mw} is the mean value of Δω,
- band-pass filtering of the value Δω_{mwf} to obtain the value Δω_{bp},
- obtaining the transmission value by low-pass filtering or taking the moving average of the value Δω_{bp}.

11. Device for determining a transmission parameter that describes a reliability of transmission between two components that transmit a motion through frictional engagement, which transmission parameter describes the reliability of transmission through the reaction of the transmission of motion to a change in the clamping force between the components that are frictionally engaged, which device includes:
- a modulating apparatus (20) for modulating the clamping force in a predetermined frequency range during the transmission of motion,
- a motion detecting apparatus (30, 32) for detecting the change in the transmission of motion during the modulation of the clamping force, and
- an evaluating apparatus (34) containing at least one filter, for evaluating the change in the transmission of motion and for determining the transmission parameter as the result of the evaluation, using the method according to one of Claims 1 through 10.

## Revendications

1. Procédé pour la détermination d'une grandeur de transmission décrivant une sécurité de transmission entre deux composants transmettant un mouvement par application d'une friction, ladite grandeur de transmission décrivant la sécurité de transmission par réaction de la transmission de mouvement à une variation de la force de serrage active entre les deux composants soumis à une friction, ledit procédé comprenant les étapes suivantes :
- modulation de la force de serrage dans une plage de fréquence définie pendant la transmission de mouvement,
- saisie de la variation de la transmission de mouvement pendant la modulation de la force de serrage,
- évaluation de la variation de la transmission de mouvement en recourant à un procédé de filtrage, et
- détermination de la grandeur de transmission en tant que résultat de l'évaluation,
- tous les maximums relatifs entre les passages par zéro étant utilisés pour la détermination d'une information sur la sécurité de transmission entre les composants transmetteurs de mouvement.

2. Procédé pour la détermination d'une grandeur de transmission décrivant une sécurité de transmission entre deux composants transmettant un mouvement par application d'une friction, ladite grandeur de transmission décrivant la sécurité de transmission par réaction de la transmission de mouvement à une variation de la force de serrage active entre les deux composants soumis à une friction, ledit procédé comprenant les étapes suivantes :
- modulation de la force de serrage dans une plage de fréquence définie pendant la transmission de mouvement,
- saisie de la variation de la transmission de mouvement pendant la modulation de la force de serrage,
- évaluation de la variation de la transmission de mouvement en recourant à un procédé de filtrage, et
- détermination de la grandeur de transmission en tant que résultat de l'évaluation,
- l'information sur la sécurité de transmission étant obtenue par formation d'une moyenne de tous les maximums relatifs.

3. Procédé selon l'une des revendications 1 ou 2, où le filtrage est réalisé dans une plage de fréquence étroite autour de la plage de fréquence de la modulation.

4. Procédé selon l'une des revendications 1 à 3, où un filtre passe-bande est utilisé pour le filtrage.

5. Procédé selon l'une des revendications 1 à 4, où un filtre avec une pente de flanc d'au moins 40 dB/décade est utilisé.

6. Procédé selon l'une des revendications 2 à 5, où tous les maximums relatifs entre les passages par zéro sont utilisés pour la détermination d'une information sur la sécurité de transmission entre les composants transmetteurs de mouvement.

7. Procédé selon l'une des revendications 1 ou 3 à 6, où l'information sur la sécurité de transmission est obtenue par formation d'une moyenne de tous les maximums relatifs.

8. Procédé selon l'une des revendications 1 à 7, où un filtre passe-bas est utilisé pour l'évaluation.

9. Procédé selon l'une des revendications 1 à 8, où les composants transmetteurs de mouvement sont les deux paires de disques d'un entraînement par enroulement à rapport de transmission continûment variable, reliées entre elles par un moyen d'enroulement, et où la force de serrage est modulée entre les paires de disques et le moyen d'enroulement.

10. Procédé selon la revendication 9, comprenant les étapes suivantes :
- détermination du rapport de transmission iᵥₐᵣ de l'entraînement par enroulement à partir du quotient des vitesses de rotation ω_{SS1} et ω_{SS2} des deux paires de disques,
- filtrage passe-bas du rapport iᵥₐᵣ pour former la valeur iᵥₐᵣₜₚ,
- détermination du différentiel de vitesses de rotation Δω = ωₛₛ₁ - iᵥₐᵣₜₚωₛₛ₂,
- formation de la valeur Δω_{mwf} = Δw - Δω_{mw}, Δω_{mw} étant égal à la moyenne de Δw,
- filtrage passe-bande de la valeur Δω_{mwf} pour former la valeur Δω_{bp},
- formation de la grandeur de transmission par filtrage passe-bas ou formation de moyenne glissante de la valeur △ω_{bp}.

11. Dispositif pour la détermination d'une grandeur de transmission décrivant une sécurité de transmission entre deux composants transmettant un mouvement par application d'une friction, ladite grandeur de transmission décrivant la sécurité de transmission par réaction de la transmission de mouvement à une variation de la force de serrage active entre les deux composants soumis à une friction, ledit dispositif comprenant :
- un équipement de modulation (20) pour la modulation de la force de serrage dans une plage de fréquence définie pendant la transmission de mouvement,
- un équipement de saisie de mouvement (30, 32), pour la saisie de la variation de la transmission de mouvement pendant la modulation de la force de serrage, et
- un équipement d'évaluation (34) comprenant au moins un filtre, pour l'évaluation de la variation de la transmission de mouvement et pour la détermination de la grandeur de transmission en tant que résultat de l'évaluation, par application du procédé selon l'une des revendications 1 à 10.
